# EUROPEAN PATENT SPECIFICATION

(11) **EP 0 954 064 B1**
(45) Date of publication and mention of the grant of the patent: **30.06.2004**
(21) Application number: 99107451.9
(22) Date of filing: 28.04.1999
(51) Int. Cl.: H01R 13/64, H01R 13/645, H01R 43/18

(54) **Male and female connector pair and set of mating connectors**
Steckverbindungspaar und Steckverbindersatz
Paire de connecteurs mâle et femelle et jeu de connecteurs

(30) Priority: 28.04.1998 JP 11851398; 08.06.1998 JP 15929098
(43) Date of publication of application: 03.11.1999
(73) Proprietor: Sumitomo Wiring Systems, Ltd., Yokkaichi-City, Mie, 510-8503 (JP)
(72) Inventor: Sasai, Osamu, 1-14 Nishisuehiro-cho Yokkaichi-ken, Mie (JP)
(74) Representative: Müller-Boré & Partner Patentanwälte

(56) References cited:
- EP-A- 0 495 505
- DE-A- 3 601 115
- PATENT ABSTRACTS OF JAPAN vol. 015, no. 187 (E-1067), 14 May 1991 (1991-05-14) & JP 03 049174 A (NIPPONDENSO CO LTD), 1 March 1991 (1991-03-01)

## Description

The present invention relates to a male and female connector pair and to a set of mating connectors comprising a plurality of such male and female connector pairs.

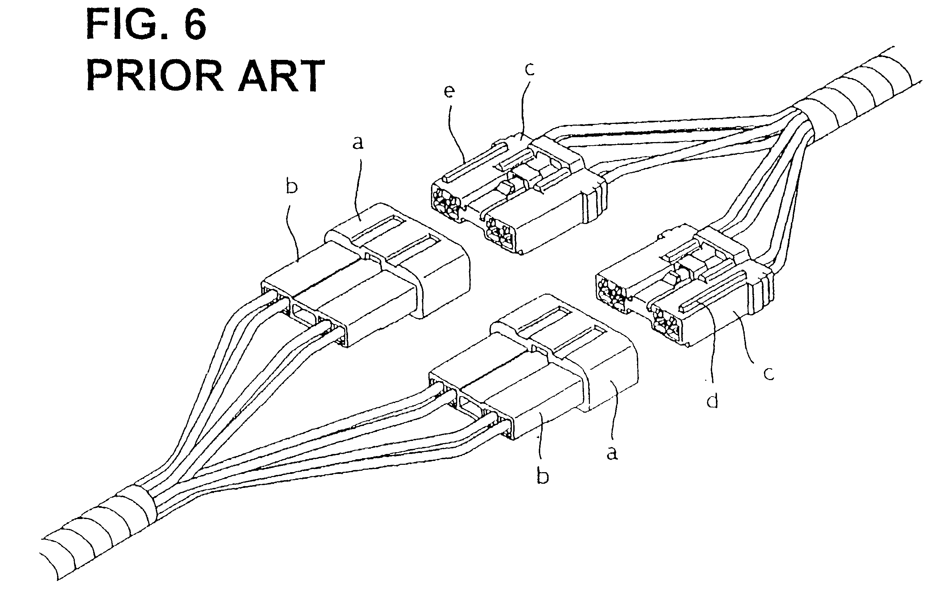

FIG. 6 shows male and female connector pairs known to applicant as "in-house state of the art". There are two male housings b having receptacles a and two female housings c to be fittable into the receptacles a. There is provided an identification means for permitting the connector housings to be connected with each other only in a proper combination. This identification means is constructed as follows. A rib d extending in a direction of connection is formed in a right end position of the upper surface of the female housing c located at a right side in FIG. 6 and a receiving groove (not shown) along which the rib d is fittable is formed in a corresponding position of the inner surface of the receptacle a of the male housing b with which the above female housing c is to be connected. Further, a rib e is formed in a left end position of the upper surface of the female housing c located at a left side in FIG. 6 and a receiving groove (not shown) along which the rib e is fittable is formed in a corresponding position of the inner surface of the receptacle a of the male housing b with which the above female housing c is to be connected.

In the case of a proper combination of the male and female housings, they are connected while the ribs d, e and the receiving grooves are engaged with each other. On the other hand, in the case of a transversely reversed combination of the male and female housings, they cannot be connected because the ribs d, e come into contact with the leading ends of the receptacles a.

In the above connector, the ribs d, e are formed on the female housings c and the receiving grooves are formed in the male housings b in order to prevent an error assembling. However, only the ribs d, e of the female housings c can be easily identified by seeing or touching the connector housings. The confirmation of the receiving grooves of the male housings is accompanied by a cumbersome operation of looking into the receptacles a or inserting a finger thereinto.

Further, under the condition that the connector housings are connected by feeling without seeing them, operability is further reduced since the ribs d, e need to be searched by the finger tip. Particularly, if the connector housings are so small that the finger cannot be inserted into the receptacles a, operability is even poorer.

JP-A-3 049 174 discloses a connector for preventing the erroneous connection of connectors in which projections are formed on the one connector and recesses for receiving these projections are formed in a surface part of a receptacle of the other connector, which surface part projects outward from the outer surface of the receptacle.

EP 0 495 505 A2 discloses a connector which is mateable with a connector receptacle, whereby the connector is provided with a key which is insertable into a respective groove projecting from the outer surface of the connector receptacle.

EP 0 526 053 A2 discloses a connector comprising a main connector body having a receptacle for receiving a plurality of mating connector bodies. A rib is formed inside the receptacle on which the female terminal of the mating connectors abuts if the wrong connector is inserted into the receptacle.

In view of the above problems, it is an object of the present invention to improve a function of preventing an error assembling of male and female connectors.

This object is solved according to the invention by a male and female connector pair according to claim 1 and by a set of mating connectors according to claim 6. Preferred embodiments of the invention are subject of the dependent claims.

Since the identification means are provided on the outer surfaces of both connectors, whether or not the combination of the connectors is proper can be securely discriminated by seeing or touching. Therefore, the connectors have an excellent function of preventing an error assembling.

According to a preferred embodiment of the invention, the identification means are in the form of a projection and/or a recess so as to be recognizable by touching.

Thus, an error assembling can be securely prevented even in the case that the connectors are connected by feeling without seeing the connectors.

Preferably, the error assembling preventing portion is one of a projection and a recess and the receiving portion being the other thereof.

A discrimination by touching as to whether or not the combination of the connectors is proper is made by judging whether or not the error assembling preventing portion of the one connector and the identification portion of the other connector correspond, preferably are substantially aligned on the same straight fine with the two connectors faced preferably exactly opposite to each other. Since the identification means correspond, preferably are substantially aligned on the same straight line, if the combination of the two connectors is proper, the connectors can be easily and securely identified.

Further preferably, the identification means is in the form to be only visually identifiable.

According to the invention, there is further provided a set of mating connectors, comprising two or more male and female connector pairs according to the invention and being connectable with each other, wherein the identification means provided on each male and female connector pair are different.

According to a preferred embodiment of the invention, the error assembling preventing portion and/or the identification portion of each male and female connector pair are positioned in different positions, preferably in positions being laterally displaced or shifted or displaced in a direction at an angle different from 0° or 180° with respect to the connection direction with respect to each other.

These and other objects, features and advantages of the present invention will become more apparent upon a reading of the following detailed description and accompanying drawings in which:
FIG. 1 is a perspective view showing two pairs of male and female connectors according to a first embodiment,
FIG. 2 is a perspective view of one pair of male and female connectors of FIG. 1,
FIG. 3 is a perspective view of the other pair of male and female connectors of FIG. 1,
FIG. 4 is a plan view of the one pair of male and female connectors of FIG. 1,
FIG. 5 is a plan view of the other pair of male and female connectors of FIG. 1, and
FIG. 6 is a perspective view of two pairs of male and female connectors known to applicant.

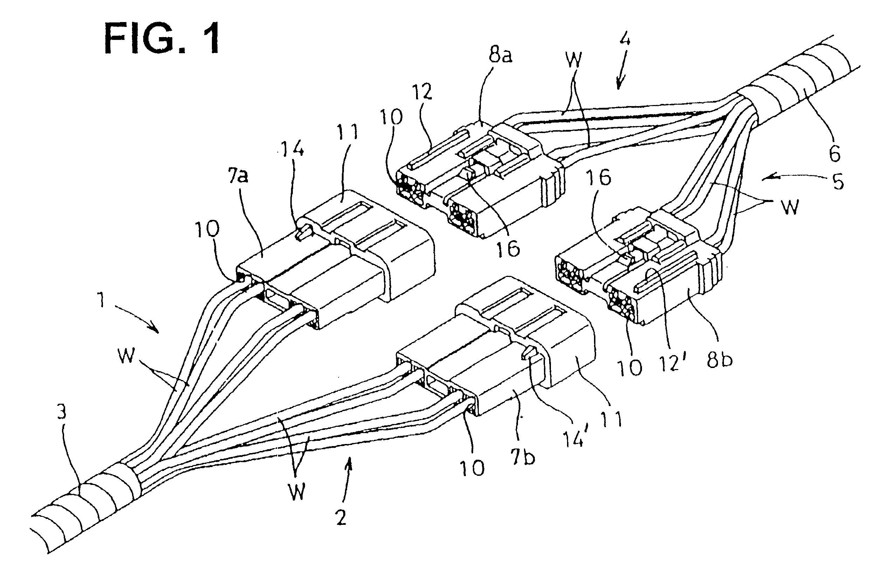

Hereafter, a first embodiment of the invention is described with reference to FIGS. 1 to 5.

FIG. 1 shows an end of a wiring harness 3 obtained by bundling a first wire group 1 and a second wire group 2 which are each comprised of a plurality of wires W and an end of a wiring harness 6 obtained by bundling a first wire group 4 and a second wire group 5 which are each also comprised of a plurality of wires W. First and second male connectors 7a, 7b are connected with an end of the wire group 1 and an end of the wire group 2, respectively. On the other hand, a first female connector 8a paired with the first male connector 7a is connected or connectable with an end of the first wire group 4 of the wiring harness 6, and a second female connector 8b paired with the second male connector 7b is connected or connectable with an end of the second wire group 5.

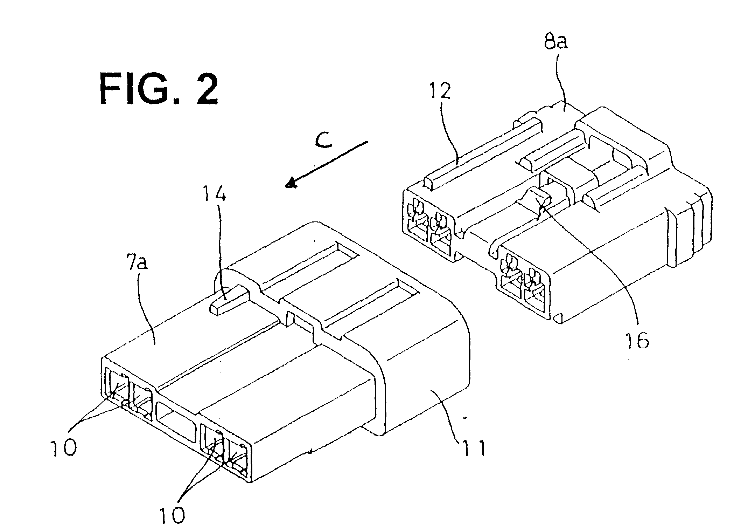

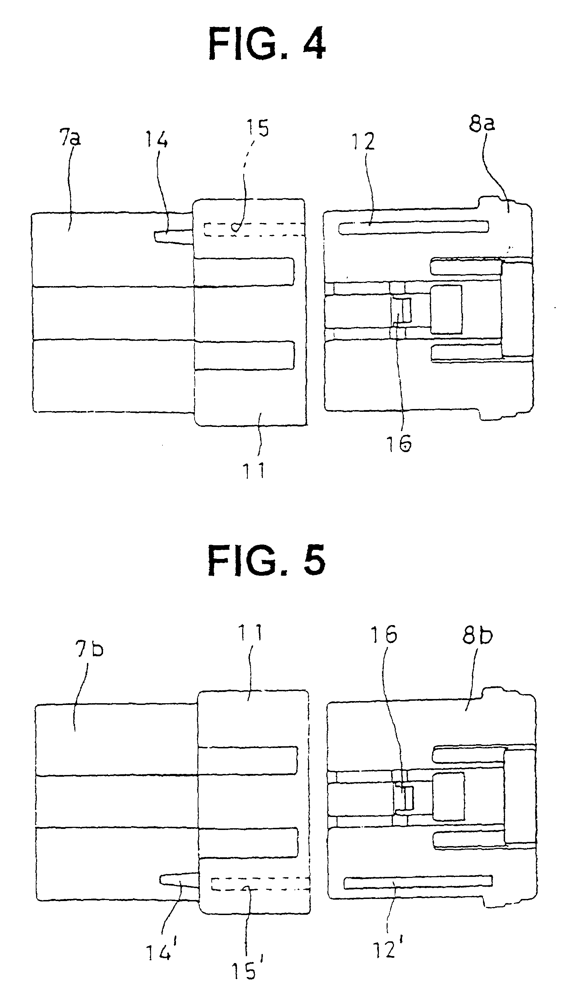

FIGS. 2 and 4 show the mating first male and female connectors 7a and 8a. The first male connector 7a is formed with cavities 10 into which male terminal fittings (not shown) connected with the wires W are at least partially insertable, and a receptacle 11 into which a mating or front end portion of the first female connector 8a is at least partially fittable or insertable is formed at the mating or front end of the first male connector 7a. The first female connector 8a is formed with cavities 10 into which female terminal fittings (not shown) connected with the wires W are at least partially insertable, and a mating or front end thereof is so shaped as to be substantially closely fittable into the receptacle 11 of the first male connector 7a.

On the upper surface of the first female connector 8a is formed an error assembling preventing rib 12 as an error assembling preventing portion in a first lateral position, e.g. in a position toward the right end when viewed from behind with respect to a direction C of connection with the first male connector 7a. The first male connector 7a is formed with an identification rib 14, as an identification portion, in a position substantially corresponding to that of the error assembling preventing rib 12. The rib 14 extending substantially backward (along the direction C of connection away from the mating end portion) from the base end of the receptacle 11 is substantially located on the same straight line as the rib 12 or substantially in flush therewith when the first male connector 7a and the first female connector 8a are preferably properly faced to each other.

In the inner surface of the receptacle 11, a receiving groove 15, as a receiving portion, along which the error assembling preventing rib 12 of the first female connector 8a is at least partially fittable or insertable and which substantially extends in the direction C of connection is formed in a position corresponding to the rib 12. Accordingly, the first male and female connectors 7a and 8a are connectable only when being preferably properly faced to each other as shown in FIGS. 1, 2 and 4.

Further, a locking portion 16 is formed in the middle of the upper surface of the first female connector 8a. The locking portion 16 is substantially engageable with an engaging portion (not shown) formed in the inner surface of the receptacle 11 when the first male and female connectors 7a and 8a are completely connected with each other, thereby locking the connectors 7a and 8a into each other.

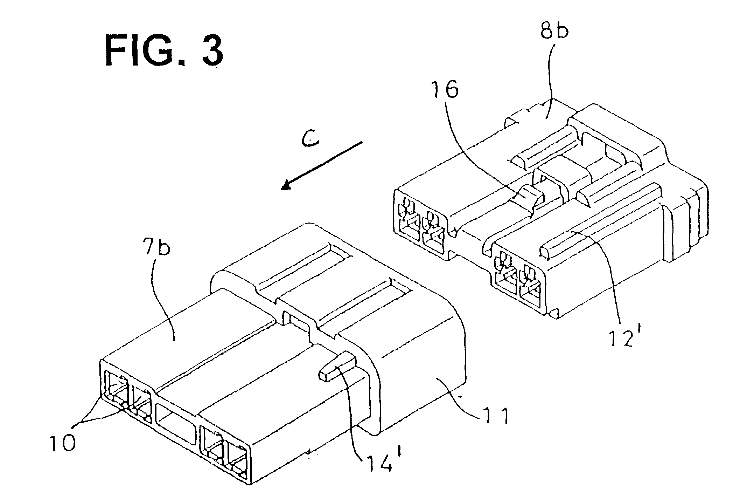

FIGS. 3 and 5 show the mating second male and female connectors 7b and 8b. The second male and female connectors 7b and 8b have substantially the same constructions as the first male and female connectors 7a and 8a, respectively. Differences lie in the position of the error assembling preventing rib 12' as the error assembling preventing portion, that of the identification rib 14' as the identification portion and that of the receiving groove 15' as the receiving portion.

Specifically, unlike the first female connector 8a in which the error assembling preventing rib 12 is formed at a first lateral side, e.g. at the right side when viewed from behind with respect to the direction C of connection, the rib 12' is formed at a second position being preferably spaced in a lateral direction from the first position, e.g. at the left side of the second female connector 8b. The second male connector 7b is formed with the identification rib 14' substantially corresponding to the error assembling preventing rib 12'. The rib 14' extending substantially backward from the base end of the receptacle 11 is located substantially on the same straight line as or substantially in flush with the rib 1 2' when the second male connector 7b and the first female connector 8b are properly faced to each other.

In the inner surface of the receptacle 11, the receiving groove 15' along which the error assembling preventing rib 12' of the second female connector 8b is at least partially fittable and which extends substantially in the direction of connection C is formed in a position substantially corresponding to the rib 12'. Accordingly, the second male and female connectors 7b and 8b are connectable only when being properly faced to each other as shown in FIGS. 1, 3 and 5.

The male and female connectors according to this embodiment are constructed as above. The discrimination as to whether or not the combination of the connectors is proper can be made by judging whether or not the ribs 12 and 14 or 12' and 14' substantially correspond or are substantially aligned on the same straight line. This judgment can be easily made by seeing and/or touching. Therefore, the connecting operation can be easily and quickly performed even under the condition that the connector housings are connected by feeling without seeing them.

The present invention is not limited to the described and illustrated embodiment but, for example, the following embodiments are also embraced by the technical scope of the present invention as defined in the claims. Besides the following embodiments, a variety of other changes can be made without departing from the scope of the invention as defined in the claims.
(1) Although the identification means can be identified by both seeing and touching in the foregoing embodiment, they may be only visually identifiable, e.g. by projections and/or recesses being visible e.g. inside an opening or window provided in the connector(s) and/or by the color.
(2) Although the identification means are projections in the foregoing embodiment, it may be a recess or a combination of a projection and a recess according to the invention.

### LIST OF REFERENCE NUMERALS

- 7a: First Male Connector
- 7b: Second Male Connector
- 8a: First Female Connector
- 8b: Second Female Connector
- 11: Receptacle
- 12, 12': Error Assembling Preventing Rib
(Error Assembling Preventing Portion)
- 14, 14': Identification Rib (Identification Portion)
- 15, 15': Receiving Groove (Receiving Portion)

## Claims

1. A male and a female connector pair (7a, 8a; 7b, 8b) comprising:
- a first (7a; 7b) connector and a second (8a; 8b) connector substantially connectable with each other, where a part of the first connector (7a; 7b) forms a receptacle (11) having an outer surface, an inner surface defining a receiving space into which second connector (8a; 8b) is at least partially fittable, an opening through which the second connector (8a, 8b) can be fitted into the receiving space, and a base being located opposite to the opening,
- an identification means (12, 14; 12', 14') for showing that male and female connectors (7a, 8a;7b, 8b) are a proper mating pair, where the identification means comprises an error assembling preventing portion (12; 12') formed on an outer surface of the second connector (8a; 8b) so as to substantially extend along a direction (C) of connection of the pair of connectors (7a, 8a; 7b, 8b),
- a receiving portion (15; 15') formed inside the receiving space of the receptacle and not being identifiable at the outside surface of the receptacle, (11) in a position substantially corresponding to that of the error assembling preventing portion (12; 12') and substantially extending along the direction of connection (C) such that the error assembly preventing portion (12; 12') is at least partially engageable with said receiving portion (15; 15'), and
- an identification portion (14; 14') in addition to the receiving portion (15; 15'), the identification portion (14; 14') being located at the base of the receptacle (11) at the outside surface of the first connector (7a, 7b) and extending away from the opening of the receptacle, the identification portion (14; 14') being so formed as to correspond to the error assembling preventing portion (12;12') when the both connectors (7a, 8a; 7b, 8b) are substantially faced opposite to each other.

2. A male and female connector pair according to claim 1, wherein the identification means (12, 14; 12', 14') is in the form of a projection and/or a recess so as to be recognizable by touching.

3. A male and female connector pair according to one or more of the preceding claims, wherein the error assembling preventing portion (12; 12') is one of a projection and a recess and the receiving portion (15; 15') is the other thereof.

4. A male and female connector pair according to one of the preceding claims, wherein the identification portion (14; 14') is so formed on the upper surface of the other connector (7a; 7b) as to extend on the same straight line as the error assembling preventing portion (12; 12') of the one connector (8a; 8b) when the both connectors (7a, 8a; 7b, 8b) are faced exactly opposite to each other.

5. A male and female connector pair according to one or more of the preceding claims, wherein the identification means (12, 14; 12', 14') is in the form to be only visually identifiable.

6. A set of mating connectors, comprising two or more male and female connector pairs (7a, 8a; 7b, 8b) according to one or more of the preceding claims and being connectable with each other, wherein the identification means (12, 14, 12', 14') provided on each male and female connector pair (7a, 8a; 7b, 8b) are different.

7. A set of mating connectors according to claim 6, wherein the error assembling preventing portion (12; 12') and/or the identification portion (14, 14') of each male and female connector pair (7a, 8a; 7b, 8b) are positioned in different positions, preferably in positions being laterally displaced with respect to each other.

## Patentansprüche

1. Steckverbindungspaar bzw. Stecker- und Buchsen-Verbinderpaar (7a, 8a; 7b, 8b), umfassend:
- einen ersten (7a; 7b) Verbinder und einen zweiten (8a; 8b) Verbinder, welche im wesentlichen miteinander verbindbar sind, worin ein Teil des ersten Verbinders (7a; 7b) eine Aufnahme (11) ausbildet, welche eine äußere Oberfläche, eine innere Oberfläche, welche einen aufnehmenden Raum bzw. Aufnahmeraum definiert, in welchen ein zweiter Verbinder (8a, 8b) wenigstens teilweise einpaßbar ist, eine Öffnung, durch welche der zweite Verbinder (8a, 8b) in den aufnehmenden Raum eingepaßt werden kann, und eine Basis aufweist, welche gegenüberliegend zu der Öffnung angeordnet ist,
- Identifikationsmittel (12, 14; 12', 14'), um zu zeigen, daß Stecker- und Buchsenverbinder (7a, 8a; 7b, 8b) ein ordnungsgemäßes zusammenpassendes bzw. abgestimmtes Paar sind, worin die Identifikationsmittel einen einen fehlerhaften Zusammenbau verhindernden Abschnitt (12; 12') aufweisen, welcher an einer äußeren Oberfläche des zweiten Verbinders (8a; 8b) ausgebildet ist, um sich im wesentlichen entlang einer Richtung (C) einer Verbindung des Paars von Verbindern (7a, 8a; 7b, 8b) zu erstrecken,
- einen aufnehmenden bzw. Aufnahmeabschnitt (15; 15'), welcher im Inneren des aufnehmenden Raums der Aufnahme, und nicht an der außenliegenden Oberfläche der Aufnahme identifizierbar ist, (11) in einer Position im wesentlichen entsprechend derjenigen des einen fehlerhaften Zusammenbau verhindernden Abschnitts (12; 12') ausgebildet ist und sich im wesentlichen entlang der Richtung einer Verbindung (C) erstreckt, so daß der einen fehlerhaften Zusammenbau verhindernde Abschnitt (12; 12') wenigstens teilweise mit dem aufnehmenden Abschnitt (15; 15') in Eingriff bringbar ist, und
- einen Identifikationsabschnitt (14; 14') zusätzlich zu dem aufnehmenden Abschnitt (15; 15'), wobei der Identifikationsabschnitt (14; 14') an der Basis der Aufnahme (11) an der außenliegenden Oberfläche des ersten Verbinders (7a, 7b) angeordnet ist und sich weg von der Öffnung der Aufnahme erstreckt, wobei der Identifikationsabschnitt (14; 14') so ausgebildet ist, um dem einen fehlerhaften Zusammenbau verhindernden Abschnitt (12; 12') zu entsprechen, wenn die beiden Verbinder (7a, 8a; 7b, 8b) im wesentlichen einander gegenüberliegen bzw. zueinander gerichtet sind.

2. Steckverbindungspaar nach Anspruch 1, worin die Identifikationsmittel (12, 14; 12', 14') in der Form eines Vorsprungs bzw. einer Erhebung und/oder einer Vertiefung bzw. Ausnehmung vorliegen, so daß sie durch ein Berühren erkennbar sind.

3. Steckverbindungspaar nach einem oder mehreren der vorangehenden Ansprüche, worin der einen fehlerhaften Zusammenbau verhindernde Abschnitt (12; 12') einer eines Vorsprungs und einer Vertiefung ist und der aufnehmende Abschnitt (15; 15') der andere davon ist.

4. Steckverbindungspaar nach einem der vorangehenden Ansprüche, worin der Identifikationsabschnitt (14; 14') so an der oberen Oberfläche des anderen Verbinders (7a; 7b) ausgebildet ist, um sich auf derselben geraden Linie wie der einen fehlerhaften Zusammenbau verhindernde Abschnitt (12; 12') des einen Verbinders (8a; 8b) zu erstrecken, wenn die beiden Verbinder (7a, 8a; 7b, 8b) exakt einander gegenüberliegend ausgerichtet sind.

5. Steckverbindungspaar nach einem oder mehreren der vorangehenden Ansprüche, worin die Identifikationsmittel (12, 14; 12', 14') in der Form vorliegen, um nur visuell identifizierbar zu sein.

6. Steckverbindersatz bzw. Satz von zusammenpassenden Verbindern, umfassend zwei oder mehrere Steckverbindungspaare (7a, 8a; 7b, 8b) nach einem oder mehreren der vorangehenden Ansprüche, und welche miteinander verbindbar sind, worin die Identifikationsmittel (12, 14, 12', 14'), welche an jedem Steckverbindungspaar (7a, 8a; 7b, 8b) vorgesehen sind, unterschiedlich bzw. verschieden sind.

7. Steckverbindersatz nach Anspruch 6, worin der einen fehlerhaften Zusammenbau verhindernde Abschnitt (12; 12') und/oder der Identifikationsabschnitt (14, 14') von jedem Steckverbindungspaar (7a, 8a; 7b, 8b) an verschiedenen Positionen, vorzugsweise an Positionen positioniert sind, welche seitlich bzw. in Seitenrichtung relativ zueinander verschoben sind.

## Revendications

1. Paire de connecteurs mâle et femelle (7a, 8a ; 7b, 8b) comprenant :
un premier connecteur (7a; 7b) et un deuxième connecteur (8a ; 8b) pouvant sensiblement s'accoupler l'un à l'autre, de sorte qu'une partie du premier connecteur (7a ; 7b) forme un réceptacle (11) ayant une surface extérieure, une surface intérieure définissant un espace de réception dans lequel le deuxième connecteur (8a ; 8b) peut s'ajuster au moins en partie, une ouverture à travers laquelle le deuxième connecteur (8a, 8b) peut être introduit dans l'espace de réception, et une base située à l'opposé de l'ouverture,
un moyen d'identification (12, 14 ; 12', 14') pour montrer que les connecteurs mâle et femelle (7a, 8a ; 7b, 8b) sont une paire complémentaire correcte, le moyen d'identification comprenant un élément empêchant l'assemblage erroné (12 ; 12') formé sur une surface extérieure du deuxième connecteur (8a ; 8b) de façon à s'étendre sensiblement le long d'une direction (C) d'accouplement de la paire de connecteurs (7a, 8a ; 7b, 8b),
un élément de réception (15 ; 15') formé à l'intérieur de l'espace de réception du réceptacle et non identifiable à la surface extérieure du réceptacle (11), dans une position correspondant sensiblement à celle de l'élément empêchant l'assemblage erroné (12 ; 12') et s'étendant sensiblement dans la direction d'accouplement (C) de sorte que l'étément empêchant l'assemblage erroné (12 ; 12') peut venir au moins en partie en prise avec le dit élément de réception (15 ; 15'), et
un élément d'identification (14 ; 14') en plus de l'élément de réception (15 ; 15'), l'élément d'identification (14 ; 14') étant situé à la base du réceptacle (11) sur la surface extérieure du premier connecteur (7a ; 7b) et s'étendant à l'opposé de l'ouverture du réceptacle, l'élément d'identification (14 ; 14') étant formé de manière à correspondre à l'élément empêchant l'assemblage erroné (12 ; 12') lorsque les deux connecteurs (7a, 8a ; 7b, 8b) sont sensiblement en face l'un de l'autre.

2. Paire de connecteurs mâle et femelle selon la revendication 1, dans laquelle les moyens d'identification (12, 14 ; 12', 14') sont sous la forme d'une saillie et/ou d'un évidement de façon à être reconnaissables au toucher.

3. Paire de connecteurs mâle et femelle selon une ou plusieurs des revendications précédentes, dans laquelle l'élément empêchant l'assemblage erroné (12 ; 12') est l'un d'une saillie et d'un évidement, et l'élément de réception (15 ; 15') est l'autre de ces configurations.

4. Paire de connecteurs mâle et femelle selon une des revendications précédentes, dans laquelle l'élément d'identification (14 ; 14') est formé sur la surface supérieure de l'autre connecteur (7a ; 7b) de façon à s'étendre sur la même ligne droite que l'élément empêchant l'assemblage erroné (12 ; 12') du premier connecteur (8a ; 8b) lorsque les deux connecteurs (7a, 8a ; 7b, 8b) sont exactement en face l'un de l'autre.

5. Paire de connecteurs mâle et femelle selon une ou plusieurs des revendications précédentes, dans laquelle le moyen d'identification (12, 14; 12', 14') est sous une forme telle qu'il est identifiable seulement visuellement.

6. Jeu de connecteurs complémentaires, comprenant deux paires, ou plus, de connecteurs mâle et femelle (7a, 8a ; 7b, 8b) selon une ou plusieurs des revendications précédentes et pouvant être mutuellement accouplés, dans lequel les moyens d'identification (12, 14 ; 12', 14') prévus sur chaque paire de connecteurs mâle et femelle (7a, 8a ; 7b, 8b) sont différents.

7. Jeu de connecteurs complémentaires selon la revendication 6, dans lequel l'élément empêchant l'assemblage erroné (12 ; 12') et/ou l'élément d'identification (14; 14') de chaque paire de connecteurs mâle et femelle (7a, 8a ; 7b, 8b) sont placés dans des positions différentes, de préférence dans des positions qui sont latéralement déplacées l'une par rapport à l'autre.
